# EUROPÄISCHE PATENTANMELDUNG

(11) **EP 2 511 651 A1**
(43) Veröffentlichungstag der Anmeldung: **17.10.2012**
(21) Anmeldenummer: 11003032.7
(22) Anmeldetag: 11.04.2011
(51) Int. Cl.: G01B 11/16, F03D 11/00

(54) **Rotor für eine Windkraftanlage und Verfahren zum Bestimmen einer Verformung eines Rotorblattes**

(71) Anmelder: Baumer Innotec AG, 8500 Frauenfeld (CH)
(72) Erfinder: Weigel, Michael, 88142 Wasserburg (DE); Tiedeke, Joachim, 8280 Kreuzlingen (CH)
(74) Vertreter: Strauss, Steffen

(57) **Zusammenfassung**

Rotor für eine Windkraftanlage mit einer Nabe, mit wenigstens einem an der Nabe befestigten Rotorblatt, einer Sendeeinheit zur Emission von elektromagnetischer Strahlung und einer in Längsrichtung des wenigstens einen Rotorblattes angeordneten Markierung zur Reflexion der emittierten elektromagnetischen Strahlung auf eine Empfangseinheit, wobei die Sendeeinheit ausgebildet ist, Strahlungspulse mit einer Frequenz zu senden, wobei die Empfangseinheit für die Dauer eines Schaltpulses entsprechend der Frequenz der Strahlungspulse zur Aufnahme eines Messsignals aktivierbar ist und wobei die Schaltpulse und die Strahlungspulse miteinander gekoppelt erzeugbar sind.

## Beschreibung

Die Erfindung betrifft einen Rotor für eine Windkraftanlage und ein Verfahren zur Bestimmung einer Verformung eines Rotorblattes eines in einer Windkraftanlage betriebenen Rotors.

Im Allgemeinen bekannte, der Erzeugung von elektrischem Strom dienende Windkraftanlagen werden in immer verstärktem Maße zur Stromgewinnung eingesetzt. Dabei werden diese insbesondere in Off-Shore-Anlagen in den Meeren einer starken mechanischen Belastung ausgesetzt. Denn bei den in derartigen Off-Shore-Anlagen herrschenden Windbedingungen können maximal zulässige Auslenkungen der Rotorblätter häufiger als bei auf dem Lande eingesetzten Windkraftanlagen überschritten werden. Wird einer solchen mechanischen Belastung durch eine verstärkte Auslenkung der Rotorblätter nicht durch eine Abschaltung der Anlage vorgebeugt, so kann es zu Zerstörungen an der gesamten Anlage kommen, die über eine Schädigung des Rotorblattes oder Rotors hinausgehen kann. Es ist denkbar, dass zu stark ausgelenkte Rotorblätter bei einer Umdrehung gegen andere Teile der Windkraftanlage stoßen und diese beschädigen. Aus diesem Grund gibt es bereits Vorschläge zur Messung der Auslenkung bzw. Verformung von Rotorblättern von Rotoren in Windkraftanlagen.

So ist beispielsweise aus der DE 10 2006 002 708 B4 ein Rotor einer Windkraftanlage bekannt, wobei eine Auslenkung des Rotorblattes optisch bestimmt werden kann. Ferner ist aus dem vorgenannten deutschen Patent ein Verfahren zur Bestimmung der Rotorblattverformung bekannt. Dabei wird Licht entlang einer Längsausdehnung des Rotorblattes, also im Wesentlichen in einer Richtung parallel zum Turm der Windkraftanlage, ausgesandt und von einer Reflexionseinheit, die zu der in der Rotomabe befindlichen Emissionseinheit des Lichtes beabstandet vorgesehen ist, auf eine Empfangseinheit zurückreflektiert, die direkt an der Emissionseinheit angebracht ist. Im Idealfall eines unverformten Rotorblattes wird das von der Reflexionseinheit zurückreflektierte Licht derart auf eine Empfangseinheit zurüdcreflektiert, dass seine Position einer Nullposition entspricht

Wird eine Verformung des Rotors beobachtet, so wird das Licht von einer als Prisma ausgebildeten Reflexionseinheit auf einer zweidimensionalen Detektormatrix ausgebildeten Empfangseinheit in einer Position empfangen, die nicht symmetrisch zu der Ausgangsposition des Lichtes ist. Aus einem Abstand des empfangenen Lichtes von der Nullposition kann das Ausmaß der Verformung bestimmt werden.

Bei dem Rotor bzw. dem Verfahren kann auch gepulstes Licht eingesetzt werden, um beispielsweise eine Lebensdauer der Lichtquelle zu verlängern, jedoch wird dadurch die mittlere optische Leistung der Lichtquelle nicht wesentlich erhöht

Zudem reduzieren die Strahlen des Umlichtes wie etwa Sonnenstrahlen ein Nutz-Störsignal-Verhältnis des durch die Reflexionseinheit reflektierten Lichtes.

Der Erfindung stellt sich daher die Aufgabe, unter Vermeidung der Nachteile des Standes der Technik eine ausrelchend genaue Bestimmung einer Verformung eines Rotorblattes einer Windkraftanlage sicherzustellen.

Die Erfindung sieht dazu einen Rotor für eine Windkraftanlage mit einer Nabe, mit wenigstens einem an der Nabe befestigten Rotorblatt, eine Sendeeinheit zur Emission von elektromagnetischer Strahlung und eine in Längsrichtung des wenigstens einen Rotorblattes angeordnete Markierung zur Reflexion der emittierten elektromagnetischen Strahlung auf eine Empfangseinheit vor.

Die Sendeeinheit ist ausgebildet, Strahlungspulse mit einer Frequenz zu senden. Die Empfangseinheit ist für die Dauer eines Schaltpulses entsprechend der Frequenz der Strahlungspulse zur Aufnahme eines Messsignals aktivierbar.

Ferner sind die Schaltpulse und die Strahlungspulse miteinander gekoppelt erzeugbar.

Ferner sieht die Erfindung ein Verfahren zur Bestimmung einer Verformung eines Rotorblattes eines Rotors einer Windkraftanlage mit den folgenden Verfahrensschritten vor:

Von einer Sendeeinheit wird elektromagnetische Strahlung in Form von Strahlungspulse mit einer Frequenz entlang einer Längserstreckung des Rotorblattes emittiert. Weiter wird

von einer im Bereich des Rotorblattes vorgesehenen Markierung elektromagnetische Strahlung auf eine Empfangseinheit reflektiert, wobei von einem der reflektierten Strahlung in der Empfangseinheit ausgelösten Messsignal eine Verformung oder Verbiegung des Rotorblattes bestimmt wird. In einem weiteren Schritt des erfindungsgemässen Verfahrens wird für die Dauer eines Schaltpulses die Empfangseinheit entsprechend der Frequenz der Strahlungspulse zur Aufnahme eines Messsignals aktiviert. Die Schaltpulse und die Strahlungspulse werden miteinander gekoppelt erzeugt.

Erfindungsgemäß wird das Messsignal dadurch gewonnen, dass die Markierung entsprechend der Frequenz mit Pulsen elektromagnetischer Strahlung beleuchtet wird und das reflektierte Licht entsprechend in Form von Strahlungspulsen auf bzw. in Richtung auf die Empfangseinheit reflektiert wird und die Empfangseinheit nur für einen der Bestranlungspulsdauer in etwa entsprechenden kurzen Zeitraum zur Signalaufnahme aktiviert wird. Erfindungsgemäß werden zwei Folgen von Pulsen erzeugt, die aneinander gekoppelt sind. Eine Pulsfolge bzw. deren Pulse lösen als unabhängige Größen die Aussendung bzw. Erzeugung der anderen abhängigen Pulsfolge bzw. Pulse aus.

Die Erfindung bringt den Vorteil mit sich, dass durch die gepulste und einer mit der Empfangseinheit synchronisierten Aussendung von Strahlungspulsen eine im Vergleich zum Dauerstrich-Betrieb (Continous Wave, CW) erhöhte Strahlstärke während des Schaltpulses realisiert werden kann.

Ferner wird die Messempfindlichkeit durch eine weitestgehende Reduzierung des Einflusses des in dem oder am Rotorblatt herrschenden Umlichtes erhöht. Dadurch kann ein signifikant besseres Nutz- Störsignal-Verhältnis des durch die Reflexionseinheit reflektierten Lichtes erreicht werden.

Erfindungsgemäß können der Strahlungspuls und der jeweils zugeordnete Schaltpuls gleich lang sein. Die Frequenz, mit der die Pulse ausgestrahlt bzw. erzeugt werden, beträgt bevorzugt 200 Hz. Die Pulsdauern betragen wenigstens einige Mikrosekunden, bevorzugt etwa 30 µs. Beide Pulsdauern können entsprechend der der Frequenz f entsprechenden Periodendauer variiert werden, sodass unterschiedliche Tastgrade, d.h. Ein-Aus-Verhältnisse (duty cycle) realisierbar sind. Die Frequenz f kann gemäß der gewünschten Messsignalbandbreite gewählt werden, d.h. wenige Hertz betragen durchaus aber auch im Kilohertzbereich liegen.

In einer Ausführung der Erfindung wird der Strahlungspuls jeweils vor dem zugeordneten Schaltpuls ausgestrahlt. Dann ist der Strahlungspuls bevorzugt länger als der zugeordnete Schaltpuls. Erfindungsgemäß wird die Aufnahmezeit zur Aufnahme des Messsignals also eine Belichtungszeit der Empfangseinheit gegenüber der Dauer des Strahlungspulses minimiert. Der Vorteil liegt dabei darin, dass ein Einfluss von Umgebungslicht minimiert wird.

In einer anderen Ausführungsform des Rotors und des Verfahrens wird der die Empfangseinheit zur Aufnahme des Messsignals steuernde Schaltpuls jeweils vor dem zugeordneten Strahlungspuls erzeugt. Bevorzugt wird der Schaltpuls länger als der zugeordnete Strahlungspuls gewählt. Durch eine derartige Minimierung der Dauer der Bestrahlung bzw. Beleuchtung des Rotors mit elektromagnetischer Strahlung wird vorteilhaft eine Gefährdung im Bereich der Sendeeinheit durch die intensive elektromagnetische Strahlung reduziert oder sogar weitestgehend ausgeschlossen.

In den Fällen einer ungleichen Dauer der beiden Pulse kann die jeweils kürzere Dauer einen Bruchteil wie etwa ein Tausendstel der längeren Dauer ausmachen.

Die Schaltpulse und die Bestrahlungspulse können erfindungsgemäß jeweils mit Verzögerungszeiten Δt_{p,S} zueinander ausgestrahlt bzw. erzeugt werden.

In einer besonders vorteilhaften Ausgestaltung des erfindungsgemässen Verfahrens zur Bestimmung einer Verformung eines Rotorblattes einer Windkraftanlage ist die Empfangseinheit als eine optoelektronische Kamera ausgebildet, wobei eine an dem Rotorblatt angeordnete Markierung vorgesehen ist, wobei in einem Schritt des Verfahrens die optoelektronische Kamera die Positionen der Markierungen erfasst.

Das Erfassen der Markierung kann dadurch ausgeführt werden, dass die Markierung auf eine Sensorfläche der Empfangseinheit abgebildet wird. Die Messung kann beim Verformen des Rotorblatts stattfinden. Mittels der Messung können Positionsdaten der Markierung durch die Empfangseinheit, insbesondere an eine Auswerte- und Steuereinrichtung, bereitgestellt werden.

In einem weiteren Schritt können die Auswerte- und Steuereinrichtung Bewegungsdaten aus den gemessenen Positionsdaten ermitteln.

Die Markierung kann auf einen Punkt der Sensorfläche der Empfangseinheit so abgebildet werden, dass eine laterale Änderung der Position der Markierung eine Änderung der Position des Abbildungspunktes auf der Sensorfläche bewirkt. Als lateral kann eine Richtung verstanden werden, die senkrecht zu einem Verbindungsvektor zwischen Sensor und Markierung steht.

Bei Kenntnis der Entfernung zwischen der Empfangseinheit und der Markierung kann damit eine laterale Verformung des Rotorblatts aus der Änderung der Position des Abbildungspunktes auf der Sensorfläche ermittelt werden.

Mit anderen Worten, eine Änderung der Position des Abbildungspunktes auf der Sensorfläche ist proportional zu dem Winkel zur Flächennormalen der Sensorfläche um den sich die Markierung relativ zur Empfangseinheit bewegt

Eine Positionsänderung der Markierung entlang der optischen Achse der Empfangseinheit kann auf Basis einer geometrisch-perspektivischen Betrachtung erfasst werden, mittels eines Verhältnisses zwischen einer Abmessung der Markierung und einer Abmessung ihrer Abbildung auf der Sensorfläche der Empfangseinheit, vor und nach der Positionsånderung der Markierung.

Wird bei dem Verfahren zur Bestimmung der Verformung eines Rotorblattes Lichtquellen mit grösserer Divergenz verwendet, so müssen Linsen, Blenden und derartige optische strahlformende Elemente verwandt werden, um die Strahlung zu formen.

In einer Ausführungsform der Erfindung ist die Empfangseinheit als eine abbildende Optik und eine zweidimensionale Detektormatrix aufgebaut ist, wobei die zweidimensionale Detektormatrix vorzugsweise als ein ladungsgekoppeltes Bauteil (Charge-coupled Device, CCD) umfasst. In einer anderen Ausführungsform der Erfindung kann die Empfangseinheit einen komplementären Metalloxid-HalbleiterBauelement (CMOS) umfassen. Eine einen solchen CMOS-Sensor umfassende Empfangseinheit weist hinsichtlich ihrer Empfindlichkeit bei einer Verwendung von infraroter, insbesondere aus dem nahen infraroten Bereich des optischen Spektrums resultierende Strahlung Vorteile auf. Sowohl die Ausführung der Empfangseinheit als CMOS-Bauteil als auch als CCD-Bauteil umfasst erfindungsgemäß eine Ausführung als Flächensensor.

Die Markierung kann in einer weiteren Variante als ein Retroreflektorelement ausgeführt sein.

Die bei dem erfindungsgemäßen Verfahren unter dem Einsatz des erfindungsgemäßen Rotors bevorzugt eingesetzte elektromagnetische Strahlung ist Licht. Noch weiter bevorzugt wird nahes Infrarot-Licht (NIR) zur Messung der Verformung bzw. Verformung eines Rotorblattes von Rotoren von Windkraftanlagen eingesetzt. Es versteht sich jedoch, dass im Rahmen der Erfindung je nach der Empfindlichkeit der eingesetzten Empfangseinheit auch eine andere elektromagnetische Strahlung wie sichtbares Licht (VIS), infrarotes Licht (IR) oder Millimeterwellen eingesetzt werden kann. Das Licht wird erfindungsgemäß bevorzugt von Leuchtdioden ausgesandt.

Erfindungsgemäß ist die Sendeeinheit bevorzugt in der Nabe des Rotors angeordnet bzw. wird von dort entlang einer Längserstreckung des Rotorblattes zum distalen Ende des Rotorblattes ausgestrahlt In Richtung des distalen Endes des Rotorblattes ist die Markierung angeordnet. Ebenso kann die Empfangseinheit des erfindungsgemäßen Verfahrens bzw. des erfindungsgemäßen Rotors bevorzugt in der Nabe vorgesehen sein. Denkbar ist es aber auch, die Empfangseinheit und die Sendeeinheit in einem der Nabe zugewandten Abschnitt des Rotorblattes vorzusehen. Es versteht sich, dass die Positionen von Empfangseinheit und Sendeeinheit gegeneinander austauschbar sind.

Die Erfindung sieht aber auch vor, die Positionen von Markierung und Sendeeinheit sowie Empfangseinheit zu vertauschen. In einem solchen Fall sind die Sendeeinheit sowie die Empfangseinheit in einem distalen Abschnitt des Rotorblattes vorgesehen und die Markierung befindet sich in der Nabe oder am proximalen Ende des Rotorblattes.

In einer Ausführung der Erfindung kann der Strahlungspuls in mehrere Strahlungspulse aufgeteilt werden.

Die im Vergleich zu der entsprechenden Wiederholdauer des Schaltpulses von 5 ms erfindungsgemäß kurz zu wählende Zeit zur Aussendung der aufgeteilten Strahlungspulse beträgt einige Mikrosekunden, etwa 5 µs.

Die Erfindung wird nachfolgend an Ausführungsbeispielen anhand der begleitenden, in unterschiedlichen Maßstäben und zum Teil stark schematisiert gehaltenen Zeichnungen näher erläutert. Dabei zeigen
- Fig. 1a: eine schematisierte Seitenansicht einer ersten Ausführungsform einer erfindungsgemäßen Windkraftanlage,
- Fig. 1b: eine schematisierte Seitenansicht einer zweiten Ausführungsform der erfindungsgemäßen Windkraftanlage,
- Fig. 2: eine Darstellung, welche die Abhängigkeit des Signals von einer Verformung des Rotorblattes zeigt und
- Fig. 3(a-d): Zeitablaufdiagramme zur Veranschaulichung des erfindungsgemäßen Verfahrens und der Funktionsweise des erfindungsgemäßen Rotors.

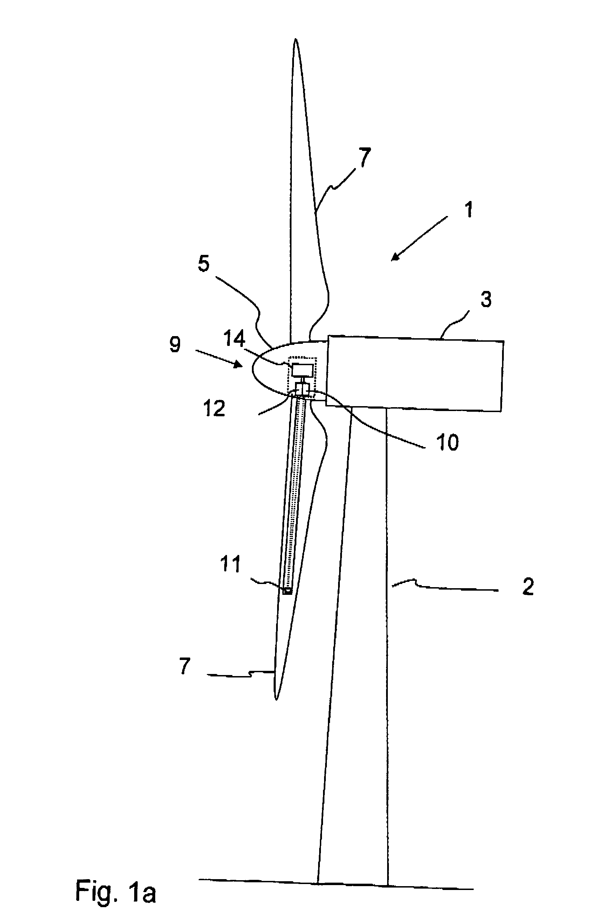

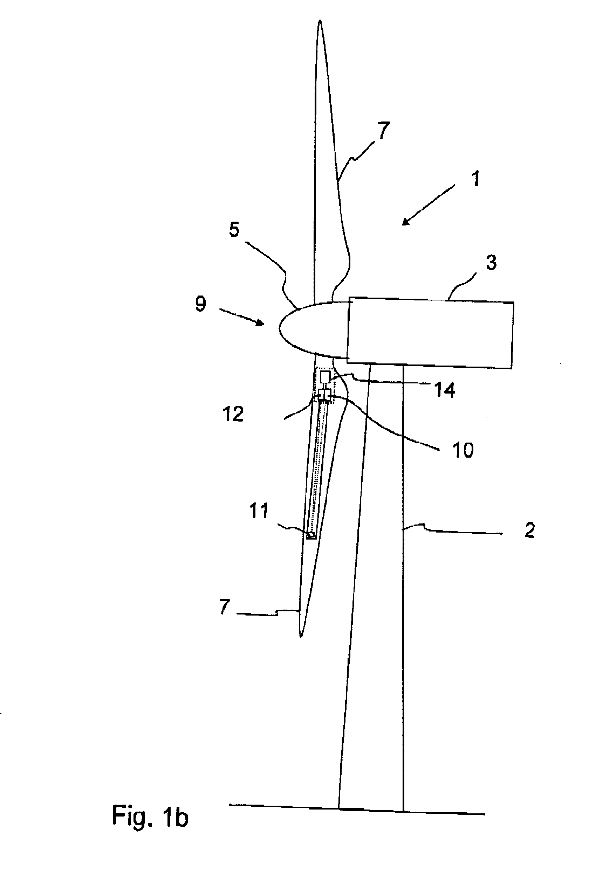

Nach Fig. 1 a weist eine erfindungsgemäße Windkraftanlage 1 auf. Die Windkraftanlage 1 besteht aus einem Turm 2 und einer, an dessen oberen Ende befindlichen Gondel 3, welches zumeist an einer dem Wind zugewandten Seite eine Nabe 5 aufweist. Die Narbe 5 ist an der Gondel 3 rotationssymmetrisch und drehbar gelagert. Von der Nabe 5 gehen an zwei gegenüberliegenden Umfangsbereichen Rotorblätter 7 im Wesentlichen parallel zu dem Turm 2 aus. Wie anhand des Rotorblattes 7 gezeigt, weist der erfindungsgemäße, mit dem Bezugszeichen 9 bezeichnete Rotor im Bereich seiner Nabe 5 eine Sendeeinheit 10 zur Aussendung von Licht auf. Das Licht wird durch eine Öffnung (nicht dargestellt) in Richtung des distalen Endes des Rotorblattes 7 ausgesendet.

Das Licht wird wie in Fig. 1 a dargestellt von einer Markierung 11 in Richtung Nabe 5 des Rotors 9 reflektiert. Das reflektierte Licht trifft auf eine Empfangseinheit 12, die sich in der Nabe 5 befindet. Bei einer in Fig. 1b dargestellten zweiten Ausführungsform der Windkraftanlage 1 befinden sich die Sendeeinheit 10 und die Empfangseinheit 12 in einem proximalen Ende des Rotorblatts 7. Das Licht wird von der am Rotorblatt 7 zu dessen distalem Ende hin vorgesehenen Markierung 11 entsprechend reflektiert.

Die von der Empfangseinheit 12 aufgenommenen Signale werden von einer Auswerte- und Steuerungseinheit 14 nach Bestrahlungsstärke und Lage analysiert. Die kombinierte Auswerte- und Steuerungseinheit 14 wird auch benutzt, um eine als CCD-Kamera ausgebildete Empfangseinheit 12 in einen zur Aufnahme eines Signals bereiten Betriebszustand zu schalten.

Mit der Auswerte- und Steuerungseinrichtung 14 wird eine Positionsänderung der Markierung 11 auf der als zweidimensionale Detektormatrix 20 ausgebildeten Teil der Empfangseinheit 12 aufgezeichnet und mit digital hinterlegten Kalibrierungsdaten, welche die Verformung bzw. Auslenkung des Rotorblattes 7 und eine entsprechende Positionsabweichung von der Normalposition in Beziehung zueinander setzt, abgeglichen. Die Normalposition ergibt sich aus der Position der Markierung 11 auf der Detektormatrix 20 der Empfangseinheit 12 im nichtverformten Zustand des Rotorblattes 7, dargestellt in den Figuren 1a und 1b.

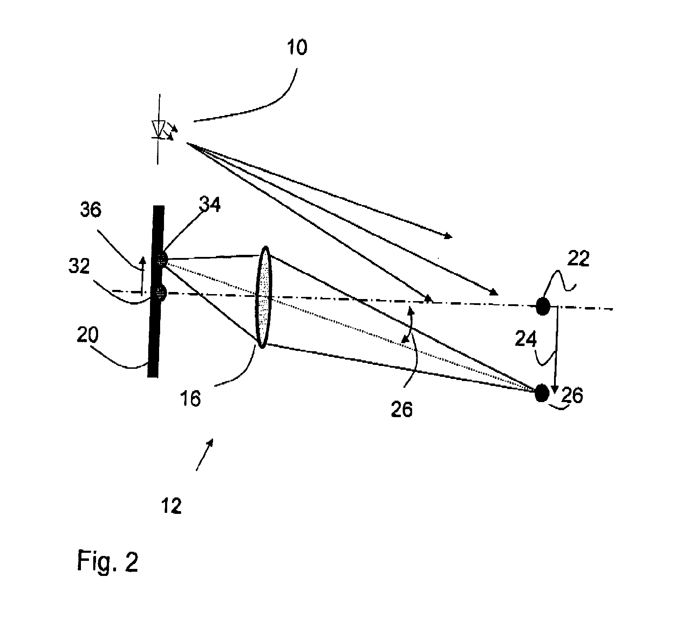

Da der Abstand der Markierung 11 von der Empfangseinheit 12 bekannt ist, kann aus einer wie in Fig. 2 schematisch veranschaulicht mittels einer Linse 16 erzeugten Abbildung 28 einer Abweichung 24 einer Position 26 des Rotorblattes 7 von einer Normalposition 22 auf der Empfangseinheit 12.

Die Auswerte- und Steuerungseinrichtung 14 wird in einem solchen Fall sofort ein Warnsignal an die Kontrolleinheit der Windkraftanlage 1 absenden, um über geeignete Maßnahmen der Betriebssteuerung Schaden von der Windkraftanlage 1 abzuwenden.

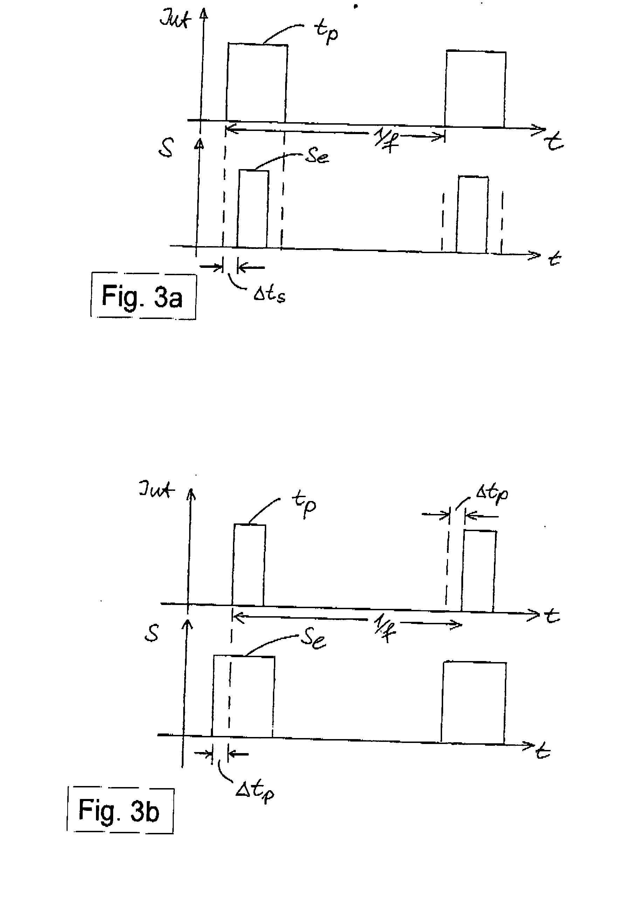

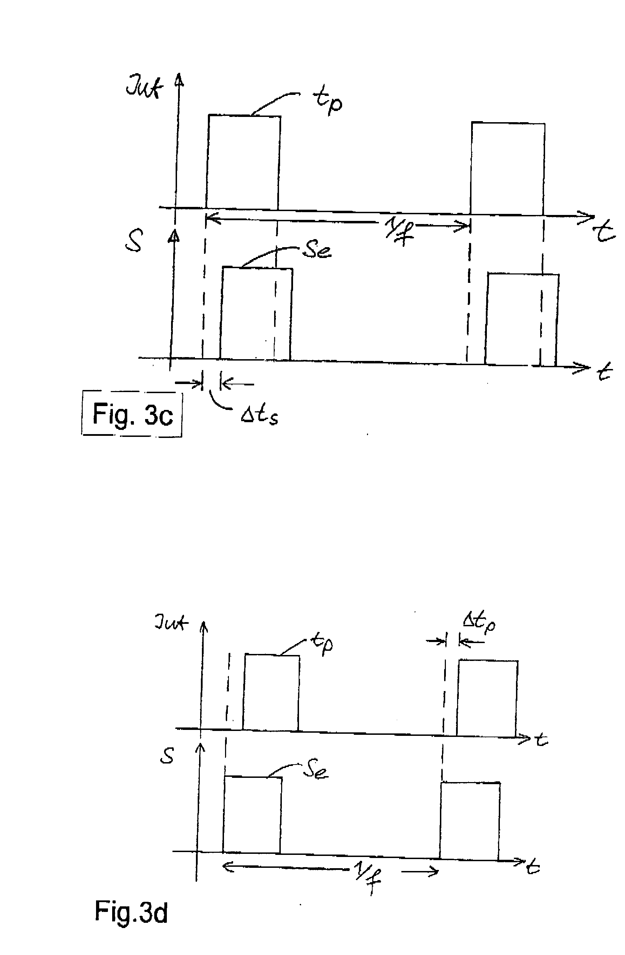

Mit dem erfindungsgemäßen Rotor 9 wird eine Umlichtunterdrückung durch eine gepulste Betriebsart wie in Fig. 3 stark vereinfacht angedeutet erreicht. Dazu wird die Strahlstärke Int mit einer Frequenz f moduliert ausgestrahlt. Beispielsweise beträgt die Frequenz f 200 Hz, so dass mit der Periodendauer von 5 ms ein Lichtpuls der Länge tₚ von der Sendeeinheit 10 ausgesandt wird. Die Dauer des Lichtpulses tₚ kann beispielsweise 30 µs betragen. Der Tastgrad (duty cycle) beträgt in diesem Fall 6 • 10⁻³. Wie in Fig. 3 (a) veranschaulicht, wird ein elektrischer Schaltpuls Sₑ, der die Sensoreinrichtung 12 in einen zur Aufnahme eines Messsignals bereiten Zustand schaltet, jeweils um eine Zeit Δt_{S} versetzt zu dem Strahlungspuls tₚ erzeugt. Folglich werden lediglich während der Dauer des Schaltpulses Sₑ, welcher beispielsweise mit einem Wert von etwa 20 µs kleiner als der Strahlungspuls tₚ ist, Messsignale von der Empfangseinheit 12 aufgezeichnet Eine Anstiegsflanke des Strahlungspulses tₚ triggert die Erzeugung des Schaltpulses Sₑ mit der vorgegebenen und einstellbaren Verzögerungszeit Δt_{S}.

Fig. 3(b) stellt einen Fall einer Realisierung der vorliegenden Erfindung dar, bei dem der Schaltpuls Sₑ dem Strahlungspuls tₚ vorangeht und dessen Auslösung steuert. Der Strahlungspuls wird dabei entsprechend der Frequenz f wiederholt ausgesendet, aber jeweils um eine Zeit Δtₚ zu dem Schaltpuls verzögert. Die zeitlichen Abstände beider sich wiederholenden Pulse betragen 1/f. Wie in Fig. 3(b) stark vereinfacht dargestellt ist, kann der Strahlungspuls tₚ in einer Ausführung der Erfindung dabei deutlich kürzer als der Schaltpuls Sₑ sein. Es können dabei beispielsweise für den Schaltpuls Dauern im Bereich von 1 bis 100 µs und für den Strahlungspuls Werte aus dem Bereich 0,5 bis 95 µs gewählt werden.

Die in den Figuren 3(c) und (d) gezeigten Ablaufdiagrammen entsprechen den in den Figuren 3 (a) und (b) gezeigten, wobei die Pulsdauern des Strahlungspulses tₚ und des Schaltpulses Sₑ in etwa gleich lang gewählt sind. Es versteht sich, dass die anhand der Fig. 3(a) bis (d) vereinfacht dargestellten Pulsefolgefrequenzen mit in der Elektronik üblichen, einem lock-in-Prinzip entsprechenden Synchronisierungstechniken von der Auswerte- und Steuerungseinrichtung 14 realisiert werden.

Durch die kurze Aufzeichnungs- bzw. Signalaufnahmezeit der Empfangseinheit 12 von beispielsweise einigen Mikrosekunden bis zu einigen zehn Mikrosekunden wird eine Signalstörung durch einen mit der Belichtungszeit linear ansteigenden Dunkelstrom der etwa als Teil der Empfangseinheit 12 ausgebildeten CCD-Kamera weitestgehend vermieden. Ferner wird durch die mit der Frequenz f wiederholten Strahlungspulsen und Schaltpulsen kurzer Dauer der Einfluss von im Wesentlichen durch reflektiertes Sonnenlicht gebildeten Umlichts des Rotorblattes 7 im Wesentlichen ausgeschaltet, zumindest aber sehr stark reduziert. Aufgrund des Pulsbetriebs (f) des Beleuchtungslichtes (tₚ) kann die Strahlstärke höher als im Dauerbetrieb gewählt werden. Damit kann selbst mit einer im Bereich von wenigstens einigen Mikrosekunden liegenden Aufnahmezeit (Sₑ) ein hinreichend gutes Messsignal mit der Empfangseinheit 12 aufgenommen werden.

### Bezugszeichenliste

- 1: Windkraftanlage
- 2: Turm
- 3: Gondel
- 5: Nabe
- 7: Rotorblatt
- 9: Rotor
- 10: Sendeeinheit
- 11: Markierung
- 12: Empfangseinheit
- 14: Auswerte- und Steuerungseinrichtung
- 16: Linse
- 20: Detektormatrix
- 22: Normalposition der Markierung
- 24: Abweichung der Normalposition von der Position der Markierung bei Verformung
- 26: Position der Markierung bei Verformung
- 32: Normalposition der Abbildung der Markierung
- 34: Abweichung der Abbildung der Normalposition von der Position der Abbildung der Markierung bei Verformung
- 36: Position der Abbildung der Markierung bei Verformung
- f: Frequenz
- tₚ: Strahlungspuls
- Sₑ: Schaltpuls
- Δt_{S}. Δtₚ: zeitliche Differenz zwischen Strahlungspuls und Schaltpuls
- S: Amplitude des Schaltpulses
- Int: Strahlstärke der Beleuchtung

## Patentansprüche

1. Rotor (9) für eine Windkraftanlage (1, 1') mit
einer Nabe (5),
mit wenigstens einem an der Nabe (5) befestigten Rotorblatt (7),
einer Sendeeinheit (10) zur Emission von elektromagnetischer Strahlung und einer in Längsrichtung des wenigstens einen Rotorblattes (7) angeordneten Markierung (11) zur Reflexion der emittierten elektromagnetischen Strahlung auf eine Empfangseinheit (12),
wobei die Sendeeinheit (10) ausgebildet ist, Strahlungspulse (tₚ) mit einer Frequenz (f) zu senden,
wobei die Empfangseinheit (12) für die Dauer eines Schaltpulses (Sₑ) entsprechend der Frequenz der Strahlungspulse (tₚ) zur Aufnahme eines Messsignals aktivierbar ist und
wobei die Schaltpulse (Sₑ) und die Strahlungspulse (tₚ) miteinander gekoppelt erzeugbar sind.

2. Rotor nach Anspruch 1, **dadurch gekennzeichnet, dass** der Strahlungspuls (tₚ) und der jeweils zugeordnete Schaltpuls (Sₑ) gleich lang sind.

3. Rotor nach Anspruch 1 oder 2, **dadurch gekennzeichnet, dass** der Strahlungspuls (tₚ) jeweils vor dem zugeordneten Schaltpuls (Sₑ) emittiert wird.

4. Rotor nach Anspruch 1 oder 3, **dadurch gekennzeichnet, dass** der Strahlungspuls (tₚ) länger als der zugeordnete Schaltpuls (Sₑ) ist.

5. Rotor nach Anspruch 1 oder 2, **dadurch gekennzeichnet, dass** der Schaltpuls (Sₑ) jeweils vor dem zugeordneten Strahlungspuls (tₚ) erzeugt wird.

6. Rotor nach Anspruch 1 oder 5, **dadurch gekennzeichnet, dass** der Schaltpuls (Sₑ) länger als der zugeordnete Strahlungspuls (tₚ) ist.

7. Rotor nach einem der Ansprüche 1 bis 6, **dadurch gekennzeichnet, dass** die Empfangseinheit (12) als eine abbildende Optik und eine zweidimensionale Detektormatrix (20) aufgebaut ist, wobei die zweidimensionale Detektormatrix (20) vorzugsweise als ein ladungsgekoppeltes Bauteil (Charge-coupled Device, CCD) oder einen komplementären Metalloxid-Halbleiter (CMOS) umfasst.

8. Rotor nach einem der vorhergehenden Ansprüche, **dadurch gekennzeichnet, dass** die Markierung (11) ein Retroreflektorelement umfasst.

9. Rotor nach einem der vorhergehenden Ansprüche, **dadurch gekennzeichnet, dass** die Sendeeinheit (10) in der Nabe (5) des Rotors (9) oder in einem der Nabe (5) zugewandten Abschnitt des Rotorblatts (7) angeordnet ist und eine Emissionsrichtung entlang einer Längserstreckung des Rotorblattes (7) zum distalen Ende des Rotorblattes (7) aufweist.

10. Verfahren zur Bestimmung einer Verformung eines Rotorblattes (7) eines Rotors (9) einer Windkraftanlage (1) mit den folgenden Verfahrensschritten:
- von einer Sendeeinheit (10) wird elektromagnetische Strahlung in Form von Strahlungspulse (tₚ) mit einer Frequenz (f) entlang einer Längserstreckung des Rotorblattes (7) emittiert,
- von einer im Bereich des Rotorblattes (7) vorgesehenen Markierung (11) wird elektromagnetische Strahlung auf eine Empfangseinheit (12) reflektiert,
- von einem der reflektierten Strahlung in der Empfangseinheit (12) ausgelösten Messsignal wird eine Verformung oder Verbiegung des Rotorblattes bestimmt,
- für die Dauer eines Schaltpulses (Sₑ) wird die Empfangseinheit (12) entsprechend der Frequenz der Strahlungspulse (tₚ) zur Aufnahme eines Messsignals aktiviert und
- die Schaltpulse (Sₑ) und die Strahlungspulse (tₚ) werden miteinander gekoppelt erzeugt.

11. Verfahren nach Anspruch 10, **dadurch gekennzeichnet, dass** der Strahlungspuls (tₚ) jeweils vor dem zugeordneten Schaltpuls (Sₑ) ausgestrahlt wird.

12. Verfahren nach Anspruch 11, **dadurch gekennzeichnet, dass** der Schaltpuls (Sₑ) jeweils vor dem zugeordneten Strahlungspuls (tₚ) erzeugt wird

13. Verfahren nach Anspruch 11 oder 12, **dadurch gekennzeichnet, dass** der Strahlungspuls (tₚ) und der Schaltpuls (Sₑ) als unterschiedlich lange Pulse erzeugt werden.
